(19) Europäisches Patentamt / European Patent Office / Office européen des brevets

(11) **EP 3 832 128 A1**

(12) **EUROPÄISCHE PATENTANMELDUNG**

(43) Veröffentlichungstag:
**09.06.2021 Patentblatt 2021/23**

(51) Int Cl.:
*F03D 7/02* *(2006.01)*    *F03D 7/04* *(2006.01)*
*F03D 9/25* *(2016.01)*    *H02J 3/18* *(2006.01)*
*H02J 3/50* *(2006.01)*    *H02J 3/38* *(2006.01)*

(21) Anmeldenummer: 20208722.7

(22) Anmeldetag: **19.11.2020**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
**KH MA MD TN**

(30) Priorität: **03.12.2019 DE 102019132786**

(71) Anmelder: **Wobben Properties GmbH
26607 Aurich (DE)**

(72) Erfinder:
• **Brombach, Johannes
13437 Berlin (DE)**
• **Amelsberg, Swantje
27804 Berne (DE)**
• **Busker, Kai
26629 Großefehn (DE)**

(74) Vertreter: **Eisenführ Speiser
Patentanwälte Rechtsanwälte PartGmbB
Postfach 10 60 78
28060 Bremen (DE)**

(54) **VERFAHREN ZUM STEUERN EINES WINDPARKS**

(57) Die Erfindung betrifft ein Verfahren zum Einspeisen elektrischer Blindleistung (Q) an einem Netzanschlusspunkt in ein elektrisches Versorgungsnetz mittels eines mehrere Windenergieanlagen (100, WT1 - WT4) aufweisenden Windparks (112), wobei der Windpark (112) eine Parkwirkleistung ($P_{G,A}$) in das elektrische Versorgungsnetz einspeist und die Parkwirkleistung ($P_{G,A}$) sich zusammensetzt aus individuellen Anlagenwirkleistungen, die jeweils von einer der Windenergieanlagen (100, WT1 - WT4) oder, wenn der Windpark (112) zu den Windenergieanlagen (100, WT1 - WT4) eine oder mehrere weitere Erzeugungsanlagen aufweist, von einer der weiteren Erzeugungsanlagen erzeugt werden, und der Windpark (112) eine Parkblindleistung ($Q_{G,S}$) in das elektrische Versorgungsnetz einspeist und die Parkblindleistung ($Q_{G,S}$) sich zusammensetzt aus individuellen Anlagenblindleistungen ($Q_{1,S}$, $Q_{4,S}$, $Q_{N,S}$) die jeweils von einer der Windenergieanlagen (100, WT1 - WT4) oder einer der weiteren Erzeugungsanlagen erzeugt werden, und umfassend die Schritte Ermitteln einer insgesamt durch den Windpark (112) einzuspeisenden Parkblindleistung ($Q_{G,S}$), für jede Windenergieanlage (100, WT1 - WT4) und ggf. jede weitere Erzeugungsanlage Ermitteln einer von der jeweiligen Windenergieanlage (100, WT1 - WT4) bzw. jeder weiteren Erzeugungsanlage zu erzeugenden individuellen Anlagenblindleistung ($Q_{1,S}$, $Q_{4,S}$, $Q_{N,S}$), wobei für jede Windenergieanlage (100, WT1 - WT4) bzw. für jede weitere Erzeugungsanlage das Ermitteln der zu erzeugenden individuellen Anlagenblindleistung ($Q_{1,S}$, $Q_{4,S}$, $Q_{N,S}$) in Abhängigkeit von ihrer individuellen Anlagenwirkleistung und in Abhängig von der einzuspeisenden Parkblindleistung ($Q_{G,S}$) bestimmt wird.

Fig. 4

**Beschreibung**

Die vorliegende Erfindung betrifft ein Verfahren zum Einspeisen elektrischer Blindleistung in ein elektrisches Versorgungsnetz mittels eines mehrere Windenergieanlagen aufweisenden Windparks. Außerdem betrifft die vorliegende Erfindung einen Windpark, der ein entsprechendes Verfahren ausführen kann.

Windparks sind bekannt, in ihnen werden mehrere Windenergieanlagen aufgestellt, die gemeinsam über einen gemeinsamen Netzanschlusspunkt elektrische Leistung in ein elektrisches Versorgungsnetz einspeisen. Zusätzlich können solche Windparks zur Stützung und/oder Steuerung des elektrischen Versorgungsnetzes verwendet werden. Dazu kommt in Betracht, dass solche Windparks Blindleistung in das elektrische Versorgungsnetz einspeisen. Damit soll besonders eine Spannungsstützung und/oder Spannungsregulierung der Netzspannung des elektrischen Versorgungsnetzes, jedenfalls im Bereich des gemeinsamen Netzanschlusspunktes, erreicht werden, oder das Blindleistungsmanagement des Netzbetreibers unterstützt werden.

Dazu erhält ein Windpark regelmäßig eine Vorgabe zum Einspeisen elektrischer Blindleistung. Diese Vorgabe kann darin bestehen, dass ein ausdrücklicher Wert, beispielsweise von einem Netzbetreiber, vorgegeben wird, eine solche Vorgabe kann aber auch von der Netzspannung unmittelbar abhängen. Beispielsweise kann eine einzuspeisende Blindleistung der Höhe nach abhängig von einer Abweichung der Netzspannung von einer Netznennspannung bestimmt werden. In diesem Fall wird dann die einzuspeisende Blindleistung über die Netzspannung vorgegeben.

Die Einspeisung elektrischer Leistung und damit auch elektrischer Blindleistung wird bei Windparks allerdings üblicherweise über die einzelnen Windenergieanlagen gesteuert. Die von dem Windpark eingespeiste Blindleistung setzt sich somit zusammen aus diversen Teilblindleistungen der einzelnen Windenergieanlagen.

Daher wird die insgesamt von dem Park einzuspeisende Blindleistung auf die einzelnen Windenergieanlagen aufgeteilt. Sind alle Windenergieanlagen im Windpark gleich, so kann entsprechend jede Windenergieanlage einen gleichen Anteil übernehmen. Hat der Windpark also beispielsweise 10 gleiche Windenergieanlagen, so kann jede Windenergieanlage ein Zehntel der insgesamt einzuspeisenden Blindleistung bereitstellen.

Es kann aber vorkommen, dass die Windenergieanlagen nicht gleich sind, sondern vielmehr unter anderem durch unterschiedliche Nennleistungen gekennzeichnet sind. Zum Beispiel können von den 10 beispielhaft genannten Windenergieanlagen 5 eine Nennleistung von jeweils 1 MW aufweisen, wohingegen die übrigen 5 Windenergieanlagen beispielsweise eine Nennleistung von 4 MW aufweisen könnten. Eine Aufteilung in 10 identische Anteile wäre dann möglicherweise nicht sinnvoll. Das Problem kann dadurch adressiert werden, dass zur Aufteilung der insgesamt zu erzeugenden Blindleistung diese Nennleistungen berücksichtigt werden. Trotzdem kann problematisch bleiben, dass beispielsweise eine Windenergieanlage aufgrund einer durchgeführten Wartung abgeschaltet ist.

Das Deutsche Patent- und Markenamt hat in der Prioritätsanmeldung zu vorliegender Anmeldung folgenden Stand der Technik recherchiert: DE 10 2013 210 812 A1; DE 10 2007 018 888 A1 and DE 10 2018 108 023 A1.

Der vorliegenden Erfindung liegt somit die Aufgabe zugrunde, wenigstens eins der genannten Probleme zu adressieren. Insbesondere soll eine Lösung vorgeschlagen werden, bei der eine von einem Windpark insgesamt einzuspeisende Blindleistung zweckmäßig auf die einzelnen Windenergieanlagen des Windparks aufgeteilt wird. Zumindest soll zu bisher bekannten Lösungen eine alternative Lösung vorgeschlagen werden. Erfindungsgemäß wird ein Verfahren gemäß Anspruch 1 vorgeschlagen. Das Verfahren betrifft somit das Einspeisen elektrischer Blindleistung an einem Netzanschlusspunkt in ein elektrisches Versorgungsnetz mittels eines mehrere Windenergieanlagen aufweisenden Windparks. Somit sind mehrere Windenergieanlagen in einem Windpark zusammengefasst und sie speisen über den Netzanschlusspunkt in das elektrische Versorgungsnetz ein. Als Teil dieses Windparks können dabei alle diejenigen Windenergieanlagen verstanden werden, die über diesen Netzanschlusspunkt in das elektrische Versorgungsnetz einspeisen. Der Netzanschlusspunkt kann somit auch als gemeinsamer Netzanschlusspunkt synonym bezeichnet werden.

Dabei speist der Windpark eine Parkwirkleistung in das elektrische Versorgungsnetz ein, und die Parkwirkleistung setzt sich zusammen aus individuellen Anlagenwirkleistungen, die jeweils von einer der Windenergieanlagen erzeugt werden. Jede Windenergieanlage erzeugt also eine für sie individuelle Wirkleistung, die als Anlagenwirkleistung bezeichnet wird, und diese Anlagenwirkleistungen aller Windenergieanlagen des Windparks werden zusammengefasst, insbesondere zusammenaddiert zu einer Parkwirkleistung. Diese Parkwirkleistung wird in das elektrische Versorgungsnetz eingespeist. Vereinfachend werden hier Verluste zwischen den Windenergieanlagen und dem Netzanschlusspunkt zunächst vernachlässigt.

Ebenso speist der Windpark eine Parkblindleistung in das elektrische Versorgungsnetz ein und die Parkblindleistung setzt sich zusammen aus individuellen Anlagenblindleistungen, die jeweils von einer der Windenergieanlagen erzeugt werden. Somit erfolgt auch die Erzeugung der Blindleistung individuell von jeder Windenergieanlage und diese von jeder Windenergieanlage jeweils erzeugte Blindleistung wird als Anlagenblindleistung bezeichnet. Alle Anlagenblindleistungen der Windenergieanlagen des Windparks zusammen bilden dann die Parkblindleistung. Insbesondere ist die Parkblindleistung eine Summe der individuell erzeugten Anlagenblindleistungen. Auch hier wird zunächst vereinfachend davon ausgegangen, dass keine Verluste und auch keine Phasenverschiebungen zwischen den einzelnen Windenergieanlagen und dem Netzanschlusspunkt auftreten.

Ein Schritt des Verfahrens zum Einspeisen elektrischer Blindleistung ist das Ermitteln einer insgesamt durch den Windpark einzuspeisenden Parkblindleistung. Dieses Ermitteln kann so geschehen, dass ein Sollwert für die einzuspeisende Parkblindleistung von extern erhalten wird. Es kommt aber auch in Betracht, dass die einzuspeisende Parkblindleistung, die auch synonym als Parksollblindleistung bezeichnet werden kann, in Abhängigkeit von einer Netzspannung oder Netzspannungsabweichung des elektrischen Versorgungsnetzes bestimmt wird. Insbesondere kommt in Betracht, die einzuspeisende Parkblindleistung in Abhängigkeit von einer Abweichung der Netzspannung von einer Netznennspannung des elektrischen Versorgungsnetzes zu bestimmen.

Als weiterer Schritt wird vorgeschlagen, dass für jede Windenergieanlage eine von der jeweiligen Windenergieanlage zu erzeugende Anlagenblindleistung ermittelt wird. Dabei wird vorgeschlagen, dass das Ermitteln der zu erzeugenden individuellen Anlagenblindleistung für jede Windenergieanlage in Abhängigkeit von ihrer individuellen Anlagenwirkleistung und in Abhängigkeit von der einzuspeisenden Parkblindleistung erfolgt. Durch die berücksichtigten Punkte der einzuspeisenden Parkblindleistung kann somit gewährleistet werden, dass letztlich alle Windenergieanlagen zusammen auch tatsächlich die einzuspeisende Parkblindleistung erzeugen.

Für die Aufteilung dieser einzuspeisenden Parkblindleistung auf die einzelnen Windenergieanlagen wird vorgeschlagen, dies in Abhängigkeit von der Wirkleistung zu bestimmen, nämlich der Wirkleistung die jede einzelne Windenergieanlage in dem Moment erzeugt. Erzeugt also beispielsweise eine Windenergieanlage doppelt so viel Wirkleistung wie in dem Moment eine andere Windenergieanlage des Windparks, so kommt in Betracht, um ein einfaches Beispiel zu verwenden, dass diese eine Windenergieanlage doppelt so viel Blindleistung erzeugen soll wie die andere Windenergieanlage. Die zu erzeugende Anlagenblindleistung dieser einen Windenergieanlage würde in dem Fall auf einen doppelt so großen Wert festgelegt wie die zu erzeugende Anlagenblindleistung der anderen Windenergieanlage. Die zu erzeugende Anlagenblindleistung kann synonym auch als Anlagensollblindleistung bezeichnet werden.

Mit diesem Vorschlag kann nun realisiert werden, dass nicht nur die anlagenspezifischen Größen der Windenergieanlagen bei der Aufteilung der zu erzeugenden Parkblindleistung berücksichtigt werden, sondern dass auch die aktuelle Produktionstätigkeit berücksichtigt wird. Hier liegt besonders die Erkenntnis zugrunde, dass die Erzeugung von Blindleistung besonders effizient erfolgen kann, also bei vergleichsweise wenig Leistungsverlust, wenn die erzeugte Wirkleistung ebenfalls groß ist. Muss hingegen eine vergleichsweise große Blindleistung erzeugt werden, die beispielsweise dem Betrage nach größer als die erzeugte Wirkleistung der entsprechenden Windenergieanlage ist, so ist eine solche Blindleistungserzeugung mit vergleichsweise großen Verlusten behaftet. Daher wird hier vorgeschlagen, für die Ermittlung der individuellen Anlagensollblindleistungen deren aktuell erzeugte Anlagenwirkleistung zu berücksichtigen. Dadurch kann besonders vermieden werden, dass manche Anlagen eine vergleichsweise hohe Blindleistung erzeugen müssen, während sie kaum Wirkleistung erzeugen, was zu höheren Verlusten führen würde, als wenn stattdessen zumindest einen Teil dieser zu erzeugenden Blindleistung von Windenergieanlagen erzeugt wird, die vergleichsweise viel Wirkleistung erzeugen.

Insbesondere wird vorgeschlagen, dass das Ermitteln der jeweils zu erzeugenden individuellen Anlagenblindleistung in Abhängigkeit von allen individuellen Anlagenwirkleistungen erfolgt. Es wird also nicht nur für jede Windenergieanlage jeweils ihre Anlagenwirkleistung betrachtet, sondern es werden alle Anlagenwirkleistungen betrachtet, also die von allen Windenergieanlagen jeweils erzeugten Wirkleistungen. Dadurch kann bei der Aufteilung der zu erzeugenden Anlagenblindleistungen eine besonders gute Anpassung erfolgen.

Das Verfahren betrifft somit die Aufteilung einer Sollblindleistung auf die einzelnen Windenergieanlagen im Windpark. Es kommt aber auch in Betracht, und das gilt für sämtliche Ausführungsformen, dass der Windpark als Hybridpark ausgestaltet ist, also zusätzlich zu Windenergieanlagen weitere Erzeugungsanlagen, insbesondere weitere regenerative Erzeugungsanlagen, Teil des Windparks sind. Solche weiteren Erzeugungsanlagen können besonders Photovoltaikanlagen sein. Das Verfahren ist besonders auch für einen solchen Hybridpark sinnvoll, weil die unterschiedliche Form der Primärenergie, also besonders Wind einerseits und Sonnenstrahlung andererseits, zu einer stark unterschiedlichen Anlagenwirkleistung führen kann, auch jeweils bezogen auf die Nennleistung der jeweiligen Anlagen.

Bspw. kann an einem windschwachen Sommertag jede Photovoltaikanlage jeweils Nennleistung erzeugen, wohingegen jede Windenergieanlage vielleicht jeweils im Bereich von 30% ihrer Nennleistung arbeitet.

Jegliche nachfolgend beschriebenen Ausführungsformen und Erläuterungen sind auch sinngemäß auf den Hybridpark bzw. die weiteren Erzeugungsanlagen übertragbar. Zu jeder Beschreibung eines Windparks ist auch eine entsprechende Beschreibung eines Hybridparks mitzulesen. Für jede Beschreibung einer Windenergieanlage ist auch eine entsprechende Beschreibung einer weiteren Erzeugungsanlage, insbesondere einer Photovoltaikanlage mitzulesen. Zu jeder Beschreibung mehrerer Windenergieanlagen ist auch eine entsprechende Beschreibung einer oder mehrerer Windenergieanlagen in Kombination mit einer oder mehrerer weiterer Erzeugungsanlagen mitzulesen.

Gemäß einer Ausgestaltung wird vorgeschlagen, dass die individuellen Blindleistungen so bestimmt und erzeugt werden, dass die Summe aller individuellen Blindleistungen der Parkblindleistung entspricht. Demnach wird vorgeschlagen, auch die tatsächlich eingespeiste Parkblindleistung zu berücksichtigen. Beispielsweise kann vorgesehen sein, dass zunächst alle zu erzeugenden individuellen Anlagenblindleistungen ermittelt und dann tatsächlich auch erzeugt werden. Ihre Summe sollte der ermittelten Parkblindleistung entsprechen. Schwankungen und Verluste, besonders zwischen den Anlagen und dem Netzanschlusspunkt, die somit in diesem Fall doch betrachtet werden, können dazu führen, dass die tatsächlich eingespeiste Blindleistung doch nicht genau der Summe der einzelnen individuellen Anlagenblindleistungen entspricht. Es ergibt sich dann eine Abweichung zwischen einzuspeisender Parkblindleistung und eingespeister Parkblindleistung. Diese Differenz kann ausgeregelt werden, indem beispielsweise die Berechnung aller individuellen einzuspeisenden Anlagenblindleistungen erneut erfolgt, oder die bereits ermittelten zu erzeugenden Anlagenblindleistungen gleichmäßig oder mittels eines anderen Schlüssels angepasst werden, um die Differenz zwischen einzuspeisender Parkblindleistung und eingespeister Parkblindleistung zu eliminieren, insbesondere auszuregeln.

Gemäß einer Ausgestaltung wird vorgeschlagen, dass das Ermitteln der individuelle Anlagenblindleistung $Q_{N,S}$ in Abhängigkeit der einzuspeisenden Parkblindleistung $Q_{G,S}$, einer insgesamt eingespeisten Parkwirkleistung $P_{G,A}$ und der jeweils eingespeisten individuellen Anlagenwirkleistung $P_{N,A}$ bestimmt wird, nach der Formel: $Q_{N,S} = (P_{N,A}/P_{G,A})*Q_{G,S}$ wobei der Index $N$ jeweils die betrachtete Windenergieanlage bezeichnet.

Zur Berechnung der individuellen Anlagenblindleistung wird somit die aktuell eingespeiste Wirkleistung $P_{N,A}$ derselben Windenergieanlage in den Bezug gesetzt zur aktuell eingespeisten Parkwirkleistung $P_{G,A}$. Dieses Verhältnis ist somit dann der Anteil der Blindleistung, die dieselbe Anlage erzeugen soll. Entsprechend wird dieser Anteil mit der insgesamt einzuspeisenden Parkblindleistung $Q_{G,S}$ multipliziert. Das Ergebnis ist somit, dass die zu erzeugende individuelle Anlagenblindleistung jeder Anlage entsprechend des erzeugten Wirkleistungsanteils derselben Windenergieanlage ermittelt wird. Dadurch wird besonders erreicht, dass sich die einzuspeisende Blindleistung jeweils an der eingespeisten Wirkleistung derselben Windenergieanlage orientiert und dadurch wird vermieden, dass eine Windenergieanlage unverhältnismäßig viel Blindleistung einspeisen müsste, wodurch entsprechende Verluste vermieden werden.

Vorzugsweise erfolgt das Bestimmen der individuellen Blindleistung durch eine zentrale Parksteuereinheit. Eine solche zentrale Parksteuereinheit kann eine insgesamt durch den Windpark einzuspeisende Parkblindleistung ermitteln, beispielsweise über eine Schnittstelle von extern empfangen und in Kommunikation mit jeder der Windenergieanlagen stehen. Über eine solche Kommunikation kann die zentrale Parksteuereinheit, die jeweils ermittelte zu erzeugende individuelle Anlagenblindleistung an die betreffende Windenergieanlage übertragen. Die zentrale Parksteuereinheit kann auch, falls erforderlich, aktuell eingespeiste individuelle Anlagenwirkleistung $P_{N,A}$ von der betreffenden Windenergieanlage, also von der Windenergieanlage $N$, abfragen und bei der Ermittlung der zu erzeugenden individuellen Anlagenblindleistungen verwenden.

Gemäß einer Ausführungsform wird vorgeschlagen, dass das Ermitteln der individuellen Anlagenblindleistung zusätzlich in Abhängigkeit von der tatsächlich eingespeisten Parkblindleistung erfolgt. Dadurch kann eine Abweichung zwischen der insgesamt durch den Windpark einzuspeisenden Parkblindleistung von der tatsächlich eingespeisten Parkblindleistung durch eine Anpassung der zu erzeugenden individuellen Anlagenblindleistungen korrigiert oder ausgeregelt werden.

Gemäß einer Ausführungsform wird vorgeschlagen, dass ein Verhältnis der individuellen Anlagenblindleistung zur individuellen Anlagenwirkleistung für jede Windenergieanlage gleich ist. Insbesondere wird für jede Windenergieanlage die zu erzeugende individuelle Anlagenblindleistung entsprechend ermittelt. Dadurch können die Verluste bei der Erzeugung der Anlagenblindleistungen und insbesondere die Summe der Verluste für die Erzeugung aller Anlagenblindleistungen im Windpark minimiert werden.

Gemäß einer Ausgestaltung wird vorgeschlagen, dass jede einzustellende individuelle Anlagenblindleistung aus der einzuspeisenden Parkblindleistung über eine individuelle Umrechnungsfunktion berechnet wird, wobei sich die Umrechnungsfunktion wenigstens zusammensetzt aus einem vorbestimmbaren, für jede Windenergieanlage individuellen Grundwert, und einer variablen, für jede Windenergieanlage individuellen Gewichtung, wobei die variable Gewichtung in Abhängigkeit von der individuellen Anlagenwirkleistung der zugehörigen Windenergieanlage ermittelt wird.

Insbesondere kann die individuelle Umrechnungsfunktion ein veränderlicher Faktor sein, sodass die Anlagenblindleistung sich berechnet aus dem Produkt dieser Umrechnungsfunktion und der Parkblindleistung. Diese Umrechnungsfunktion als Faktor setzt sich ihrerseits aus dem individuellen Grundwert und der individuellen Gewichtung als zwei Faktoren zusammen.

Hier liegt besonders der Gedanke zugrunde, dass ein erster Zusammenhang, der auch als erste Näherung bezeichnet werden kann, über den Grundwert festgesetzt werden kann. Bei einer ersten Berechnung der individuellen Anlagenblindleistung, insbesondere wenn der Windpark bzw. die betreffende Windenergieanlage gerade hochgefahren wurde, kann die individuelle Gewichtung als Startwert den Wert 1 aufweisen. Die Anlagenwindleistung berechnet sich dann nur aus der einzuspeisenden Parkblindleistung und dem individuellen Grundwert.

Im Weiteren kann dann aber die variable individuelle Gewichtung in Abhängigkeit von der individuellen Anlagenwirkleistung der zugehörigen, also jeweiligen Windenergieanlage ermittelt werden. Um es anschaulich auszudrücken, ist die individuelle Anlagenwirkleistung der einen Windenergieanlage besonders gering, kann dies über die individuelle Gewichtung berücksichtigt werden, die, ausgehend vom obigen Beispiel, dann von dem Startwert 1 aus verringert werden kann. Der Startwert kann aber auch der letzte Wert der Gewichtung sein. Umgekehrt, wenn die individuelle Anlagenwirkleistung vergleichsweise hoch ist, kann die individuelle Gewichtung entsprechend auch erhöht werden, auch über den Wert 1 hinaus.

Besonders wird vorgeschlagen, dass jede einzustellende individuelle Anlagenblindleistung $Q_{N,S}$ aus der einzuspeisenden Parkblindleistung $Q_{G,S}$ berechnet wird nach der Berechnungsvorschrift $Q_{G,S} = k_N * G_N * Q_{G,S}$ mit $k_N$ als Grundwert, und $G_N$ als Gewichtung, wobei der Index $N$ jeweils die betrachtete Windenergieanlage bezeichnet, wobei insbesondere jede Windenergieanlage $N$ durch eine Anlagennennleistung $P_{N,R}$ gekennzeichnet ist, der Windpark durch eine Parknennleistung $P_{G,R}$ gekennzeichnet ist, die sich insbesondere als Summe aller Anlagennennleistungen $P_{N,R}$ ergibt, und der Grundwert $k_N$ jeweils ein Verhältnis der Anlagennennleistung $P_{N,R}$ zur Parknennleistung $P_{G,R}$ ist, und/oder die variable Gewichtung $G_N$ jeweils sich aus einem Verhältnis ergibt, oder ein Verhältnis beschreibt zwischen dem Verhältnis der Anlagenwirkleistung $P_{N,A}$ zur Parkwirkleistung $P_{G,A}$ und dem Verhältnis der Anlagennennleistung $P_{N,R}$ *zur* Parknennleistung $P_{G,R}$, insbesondere über die Berechnung: $G_{N,0} = (P_{N,A} / P_{G,A})/(P_{N,R}/P_{G,R})$, wobei $G_N = G_{N,0}$ ist, oder $G_N$ über eine dynamische Funktion, insbesondere mit ein PT1-Verhalten, $G_{N,0}$ nachgeführt wird.

Somit kann jede individuelle Anlagenblindleistung über diese Berechnungsvorschrift berechnet werden. Die Umrechnungsfunktion ist insoweit das Produkt aus $k_N$ und $G_N$. Das kann übrigens, besonders in einem eingeschwungenen Zustand, übereinstimmen mit dem Quotient $P_{N,A}/P_{G,A}$.

Besonders ist vorgesehen, dass der Grundwert $k_N$ jeweils nur basierend auf dem Verhältnis der Nennleistungen berechnet wird. Er wird also individuell für jede einzelne Anlage berechnet als Quotient aus der Nennleistung der betreffenden Anlage bezogen auf die Parknennleistung, also die Summe aller einzelnen Nennleistungen der Windenergieanlagen. Ein solcher Grundwert ist eine gute Näherung für eine gute Verteilung der aufzuteilenden einzustellenden Parkblindleistung.

Um aber zusätzlich zu berücksichtigen, wenn die tatsächlich erzeugte Wirkleistung der einzelnen Windenergieanlagen bezogen auf die insgesamt erzeugte Parkwirkleistung von dieser ersten Näherung, die über die Nennleistung ermittelt wurde, abweicht, kann dies über die variable individuelle Gewichtung für jede einzelne Windenergieanlage berücksichtigt werden. Der Einfachheit halber kann die variable individuelle Gewichtung auch einfach nur als variable Gewichtung oder einfach nur als Gewichtung bezeichnet werden. Dennoch liegt für jede Windenergieanlage eine Gewichtung vor und diese Gewichtungen unterscheiden sich voneinander, können sich zumindest voneinander unterscheiden.

Somit hängt diese variable Gewichtung quasi von einem doppelten Verhältnis ab, nämlich wie das Verhältnis der Anlagenwirkleistung zur Parkwirkleistung bezogen auf das Verhältnis der Anlagennennleistung zur Parknennleistung ist. Im idealen theoretischen Fall könnte das Verhältnis der Anlagenwirkleistung zur Parkwirkleistung dem Verhältnis der Anlagennennleistung zur Parknennleistung entsprechen.

Im Betrieb des Windparks können solche Idealvoraussetzungen häufig allerdings nicht vorliegen, weil beispielsweise eine Topographie des Windparks dazu führt, dass die Windenergieanlagen beispielsweise vom Wind unterschiedlich angeströmt werden. Das kann auch von der Windrichtung abhängen. Insbesondere kommen auch Parkeffekte in Betracht, bei denen eine Windenergieanlage eine andere abschattet oder mehrere andere Anlagen abschattet, teilweise auch unterschiedlich abschattet. Dann können beispielsweise 4 Windenergieanlagen, die dieselbe Nennleistung aufweisen, aber unterschiedlich viel Wirkleistung erzeugen, wenn sie beispielsweise ungünstig in einer Reihe so hintereinanderstehen, dass die vordere Windenergieanlage einen Windschatten für ihre hintere Windenergieanlage bildet, die wiederrum für eine noch weiter dahinterstehende Windenergieanlage abermals die Windgeschwindigkeit reduziert. Und bei der vierten Windenergieanlage kann gegebenenfalls der Wind noch schwächer und/oder noch turbulenter sein.

Das kann über die Berücksichtigung der dann tatsächlich erzeugten Anlagenwirkleistungen berücksichtigt werden. In dem genannten ungünstigen Beispielfall wären dann die Verhältnisse jeweils der Anlagenwirkleistung zur Parkwirkleistung anders als der Anlagennennleistung zur Parknennleistung. Für die beispielhaft genannte Windenergieanlage, die voll im Wind steht, kann es auch dazu führen, dass das Verhältnis der Anlagenwirkleistung zur Parkwirkleistung größer ist als dass der Anlagennennleistung zur Parknennleistung, denn sind andere Windenergieanlagen abgeschattet, so verringert sich die Parkwirkleistung dieser voll im Wind stehenden Windenergieanlage, ohne dass sich ihre Anlagenwirkleistung verringert. Das Verhältnis der Anlagenwirkleistung zur Parkwirkleistung wird dann also größer, wohingegen sich das Verhältnis der Anlagennennleistung zur Parknennleistung natürlich nicht verändert, da beide Nennleistungen feste Werte sind.

Das kann somit über die genannte Berechnung berücksichtigt werden, die das besagte Doppelverhältnis einfließen lässt. Es wird also das Verhältnis der Anlagenwirkleistung zur Parkwirkleistung ins Verhältnis gesetzt zum Verhältnis der Anlagennennleistung zur Parknennleistung. Damit kann die variable Gewichtung berechnet werden.

Vorzugsweise ist aber vorgesehen, dass diese Gewichtung nicht unmittelbar jeder Wirkleistungsänderung folgt. Das kann besonders unerwünscht sein, weil sich dadurch ein ständig schwankender Anlagensollblindleistungswert ergebe, was die Dynamik der Windenergieanlage beeinflussen kann. Somit wird vorgeschlagen, das besagte Doppelverhältnis über eine dynamische Funktion in die variable Gewichtung einfließen zu lassen. Besonders ist vorgesehen, dass diese Gewichtung dem besagten Doppelverhältnis über eine dynamische Funktion nachgeführt wird. Eine solche dynamische Funktion kann besonders ein PT1-Verhalten sein, also ein Verzögerungsverhalten erster Ordnung. Ein solches Verzögerungsverhalten erster Ordnung ist vergleichsweise einfach implementierbar, benötigt nur eine Variable, nämlich eine Zeitkonstante, und hat besonders den Vorteil, dass es nicht schwingfähig ist und damit auch kein Überschwinger erzeugen kann.

Vorzugsweise kann als Zeitkonstante für eine solche dynamische Nachführung, besonders als Zeitkonstante für das genannte Verzögerungsverhalten erster Ordnung, ein Wert von 5 Sekunden bis 300 Sekunden vorgeschlagen, insbesondere ein Wert im Bereich von 10 Sekunden bis 30 Sekunden. Hier wurde besonders auch berücksichtigt, dass im Wesentlichen sich ändernde Windrichtungen die Verhältnisse der erzeugten Wirkleistungen verändern und solche Windrichtungsschwankungen nicht so schnell auftreten. Somit ist auch eine schnelle Nachführung nicht unbedingt erforderlich. Darüber hinaus besteht auch kaum die Gefahr eines Schadens, sollte die Gewichtungsfunktion zu langsam nachgeführt werden, sollte also die Aufteilung der einzuspeisenden Parkblindleistung auf die einzelnen Windenergieanlagen zu langsam angepasst werden. In dem Fall käme es zu erhöhten Verlusten, was unerwünscht ist, aber dennoch nur einen geringen Einfluss, besonders auf die Jahresproduktion, hat, wenn die Nachführung der Gewichtung in den genannten kurzen Zeiten erfolgt.

Gemäß einer Ausführungsform wird vorgeschlagen, dass bei einer Änderung der eingespeisten individuellen Anlagenwirkleistung und/oder einer bzw. der eingespeisten Parkwirkleistung ein Anpassen der individuellen Anlagenblindleistung erst nach einer vorbestimmten Zeitverzögerung und/oder unter weiterer Verwendung einer dynamischer Nachführfunktion erfolgt, und/oder unter Berücksichtigung einer aktuellen Windleistung des Windparks.

Die Vorteile der zeitverzögerten Anpassung der individuellen Anlagenblindleistung wurde bereits im Zusammenhang mit der variablen Gewichtungsfunktion beschrieben. Darüber kann eine solche zeitverzögerte Anpassung der individuellen Anlagenblindleistung auch gut erfolgen. Es kommen aber auch andere Varianten in Betracht, bei der beispielsweise ein Umrechnungsfaktor direkt als Quotient der jeweiligen Anlagenwirkleistung zur Parkwirkleistung verwendet wird und dieser zeitverzögert nachgeführt wird, wenn sich Änderungen der Anlagenwirkleistung und/oder der Parkwirkleistung ergeben, wenn sich also Änderungen des Quotienten ergeben. Es kommt auch in Betracht, erfasste Änderungen der Anlagenwirkleistungen und/oder erfasste Änderungen der einzuspeisenden Parkblindleistung zeitverzögert nachzuführen und/oder zeitverzögert zu erfassen bzw. zu ermitteln, und dadurch eine zeitverzögerte Änderung zu erreichen. Die Zeitverzögerung kann hier so ausgestaltet sein, wie vorstehend zur zeitverzögerten Anpassung der individuellen Anlagenblindleistung beschrieben wurde.

Eine Berücksichtigung der aktuellen Windleistung des Windparks kann beispielsweise so durchgeführt werden, dass aufgrund einer erfassten oder auch prädizierten Windbedingung, insbesondere kurzfristig prädizierten Windbedingung im zeitlichen Bereich bis zu einer Stunde, eine solche Windleistung des Windparks berechnet wird. Dadurch kann eine ständige Auswertung der tatsächlich erzeugten Wirkleistung der einzelnen Windenergieanlagen unterbleiben und damit insbesondere eine Kommunikation innerhalb des Windparks entlastet werden.

Gemäß einer Ausführungsform wird vorgeschlagen, dass die zu erzeugende individuelle Anlagenblindleistung vorrübergehend jeweils über einen vorbestimmten Vorgabewert aus der einzuspeisenden Parkblindleistung bestimmt wird, wenn wenigstens eine Anlagenleistung für die Ermittlung der zu erzeugenden individuellen Anlagenentlastung nicht verfügbar ist. Somit wird vorgesehen, dass für den Fall, dass beispielsweise eine Kommunikationsstörung im Windpark besteht, sodass die zentrale Parksteuereinheit keinen Zugriff auf die aktuellen Anlagenwirkleistungen der einzelnen Windenergieanlagen hat, dennoch eine Vorgabe der zu erzeugenden individuellen Anlagenblindleistungen möglich ist. Hier ist zu beachten, dass für das Übertragen einer solchen zu erzeugenden individuellen Anlagenblindleistung eine einfachere Kommunikationsverbindung vorliegen kann, als für das Empfangen der aktuellen Anlagenwirkleistungen. Es kommt also in Betracht, dass die Kommunikation in dem Windpark derart gestört ist, dass die zentrale Parksteuereinheit die erzeugten Wirkleistungswerte nicht empfangen kann, dennoch Sollwerte für die einzustellenden Anlagenblindleistungen übermitteln kann.

Eine solche Situation, dass die zentrale Parksteuereinheit aktuelle Wirkleistungen nicht erhalten kann, ist zwar selten, aber für diesen Fall kann somit der Windpark trotzdem stabil weiter betrieben werden und es kann auch eine vorgegebene Parkblindleistung eingespeist werden.

Die Einstellung eines solchen vorbestimmten Vorgabewertes für jede zu erzeugende individuelle Anlagenblindleistung kann über die Variante realisiert werden, dass eine Umrechnungsfunktion verwendet wird, die sich aus einem individuellen Grundwert und einer variablen individuellen Gewichtung zusammensetzt, wobei die variable individuelle Gewichtung in diesem Störungsfall dann den Wert 1 annehmen kann. Es kommen aber auch andere Realisierungen in Betracht, bei beispielsweise eine Berechnung der individuellen Anlagenblindleistung aus der einzuspeisenden Parkblindleistung über den Faktor $P_{N,A}$ / $P_{G,A}$ erfolgt, und dieser Faktor im Falle der Nichtverfügbarkeit der Anlagenwirkleistung durch den vorbestimmten Vorgabewert vorübergehend ersetzt wird. Im Übrigen kann in diesem Sinne als vorübergehend besonders ein Zeitraum von weniger als 5 Minuten, insbesondere weniger als eine Stunde, zumindest weniger als ein Tag angenommen werden.

Gemäß einer Ausgestaltung wird vorgeschlagen, dass die zu erzeugende individuelle Anlagenblindleistung zusätzlich in Abhängigkeit von Leitungsverlusten des Windparks ermittelt wird. Insbesondere sind Übertragungsleitungen von den Windenergieanlagen zum Netzanschlusspunkt vorhanden. Auf diesen Übertragungsleitungen können Leistungsverluste auftreten und diese können vorzugsweise zusätzlich bei der Ermittlung der zu erzeugenden individuellen Anlagenblindleistung jeweils berücksichtigt werden.

Hier kommt besonders in Betracht, dass für Windenergieanlagen des Windparks, die weiter von dem Netzanschlusspunkt entfernt aufgestellt sind, als andere Windenergieanlagen, eine reduzierte Blindleistung bereitstellen, also erzeugen, als solche Windenergieanlagen, die näher an dem Netzanschlusspunkt stehen, jeweils besonders bezogen auf die verwendeten Übertragungsleitungen. Beispielsweise kann eine am weitesten von dem Netzanschlusspunkt entfernt aufgestellte Windenergieanlage eine um einen Reduktionsfaktor reduzierte zu erzeugende individuelle Anlagenblindleistung vorgegeben bekommen, während die am nächsten zum Netzanschlusspunkt stehende Windenergieanlage eine um diesen Korrekturwert erhöhte zu erzeugende individuelle Anlagenblindleistung vorgegeben bekommt. Dadurch wird somit weiterhin die jeweils zu erzeugende individuelle Anlagenblindleistung für jede Windenergieanlage in Abhängigkeit von ihrer individuellen Anlagenwirkleistung ermittelt, zusätzlich aber in Abhängigkeit von Leitungsverlusten des Windparks angepasst.

Vorzugsweise wird die zu erzeugende individuelle Anlagenblindleistung zusätzlich in Abhängigkeit von wenigstens einem Kriterium ermittelt, das ausgewählt ist aus der Liste aufweisend

- Leistungsverluste des Windparks,

- einen Kabelfaktor, der besonders als Gewichtungsfaktor den Abstand der Windenergieanlage zum Netzanschlusspunkt berücksichtigt, oder eine Netzdämpfung, oder eine Netzverstärkung eines eingebrachten Blindstroms,

- einen festen Umrichterfaktor, der in Abhängigkeit einer Einspeiseeinheit, insbesondere eines Wechselrichters, vorgegeben wird, und insbesondere als Gewichtungsfaktor, einen vorgegebenen Umrichterwirkungsgrad berücksichtigt,

- einen dynamischen Umrichterfaktor, der aktuell erfasste Eigenschaften der Einspeiseeinheit, insbesondere des Wechselrichters, insbesondere einen aktuell erfassten Wirkungsgrad der Einspeiseeinheit berücksichtigt,

- einen Überlastfaktor, der Zeit und/oder Stärke einer Überlast berücksichtigt,

- eine erwartete oder prognostizierte Leistung, und

- einen Reservefaktor, der mögliche Veränderungen der Wirkleistungserzeugung zur Erfüllung einer Systemdienstleistung berücksichtigt.

Der Kabelfaktor hängt somit von einem Abstand der Windenergieanlage zum Netzanschlusspunkt ab. Er kann umso größer gewählt werden, umso näher die Windenergieanlage an dem Netzanschlusspunkt angeordnet ist. Insbesondere kommt in Betracht, dass ein solcher Kabelfaktor für den gesamten Windpark im Schnitt den Wert 1 aufweist. Ist der Abstand zwischen Windenergieanlage und Netzanschlusspunkt besonders groß, ist der Gewichtungsfaktor kleiner als 1, ist der Abstand besonders klein, so ist der Gewichtungsfaktor größer als 1. Entsprechend wird die von der betreffenden Windenergieanlage zu erzeugende individuelle Anlagenblindleistung mit diesem Kabelfaktor multipliziert und dadurch entsprechend größer oder kleiner. Der Kabelfaktor liegt vorzugsweise im Bereich von 0,5 bis 1,5, insbesondere im Bereich von 0,8 bis 1,2.

Eine fester Umrichterfaktor ist ein Faktor, der von festen Werten der Einspeiseeinheit abhängt, besonders solche Werte, die einem entsprechenden Datenblatt der Einspeiseeinheit, also insbesondere des Wechselrichters, entnommen werden können. Eine solche Eigenschaft ist insbesondere ein Umrichterwirkungsgrad. Ist dieser hoch, kann ein größerer Wert für die zu erzeugende individuelle Anlagenblindleistung vorgegeben werden.

Ein dynamischer Umrichterfaktor ist ein solcher, der aktuell erfasste Eigenschaften der Einspeiseeinheit, insbesondere des Wechselrichters berücksichtigt.

Ein Überlastfaktor berücksichtigt Zeit und/oder Stärke einer Überlast. Befindet sich also eine Windenergieanlage in einer Überlast, so kann dies dazu führen, dass sie einen geringeren Blindleistungswert bereitstellen muss. Dabei kann das davon abhängen, wie lange diese Überlast schon besteht und wie stark sie besteht. Außerdem kann es davon abhängen, wie die Situation in den übrigen Windenergieanlagen ist.

Die Ermittlung der zu erzeugenden individuellen Anlagenblindleistung kann auch von einer zu erwartenden oder prognostizierten Leistung abhängen. Besonders wird hier vorgeschlagen, dass an Stelle einer erfassten Anlagenwirkleistung eine erwartete oder prognostizierte verwendet wird. Hier kommen besonders Kurzfristprognosen in Betracht und/oder Prognosen die über ein Lidarsystem ermittelt worden. Über ein solches Lidarsystem kann eine Windgeschwindigkeit einige 100 Meter vor der Windenergieanlage erfasst werden und eine solche prognostizierte Leistung, die sich aus einer solchen über Lidar erkannten Windgeschwindigkeit ableitet, kann Berücksichtigung finden bei der Ermittlung der zu erzeugenden individuellen Anlagenblindleistung.

Ein Reservefaktor kann mögliche Veränderungen der Wirkleistungserzeugung zur Erfüllung einer Systemdienstleistung berücksichtigen, insbesondere so, dass die zu erzeugende individuelle Anlagenblindleistung in Abhängigkeit des Reservefaktors gegenüber einer individuellen Anlagenblindleistung, die keinen Reservefaktor berücksichtigt, verringert wird. Die individuelle Anlagenleistung kann also mit Reservefaktor geringer sein, als ohne Reservefaktor.

Eine Systemdienstleistung kann eine plötzliche oder zumindest schnelle Veränderung der eingespeisten Wirkleistung erforderlich machen. Ein Beispiel einer solchen Systemdienstleistung ist das Bereitstellen einer Momentanleistung. Besonders wenn die Wirkleistung erhöht wird, kann das zu einer solchen Auslastung führen, dass die zu erzeugende individuelle Anlagenblindleistung der betreffenden Windenergieanlage nicht vollständig erzeugt bzw. bereitgestellt oder übertragen werden kann.

Um dem vorzubeugen, kann, um ein einfaches Beispiel zu nehmen, die individuelle Anlagenblindleistung bei einer ersten Windenergieanlage, die, bezogen auf ihre Nennleistung, viel Wirkleistung einspeist, etwas verringert werden. Zum Ausgleich kann eine individuelle Anlagenblindleistung bei einer zweiten Windenergieanlage, die, bezogen auf ihre Nennleistung, wenig Wirkleistung einspeist, etwas erhöht werden. Das kann über den Reservefaktor berücksichtigt werden.

Erfindungsgemäß wird auch ein Windpark vorgeschlagen. Der Windpark weist mehrere Windenergieanlagen auf und ist vorgesehen zum Einspeisen elektrischer Blindleistung an einem Netzanschlusspunkt in ein elektrisches Versorgungsnetz. Der Netzanschlusspunkt kann auch als Teil des Windparks betrachtet werden. Es wird vorgeschlagen, dass der Windpark dazu vorbereitet ist, so betrieben zu werden, dass er eine Parkwirkleistung in das elektrische Versorgungsnetz einspeist und die Parkwirkleistung sich zusammensetzt aus individuellen Anlagenwirkleistungen, die jeweils von einer der Windenergieanlagen erzeugt werden, und dass er eine Parkblindleistung in das elektrische Versorgungsnetz einspeist und die Parkblindleistung sich zusammensetzt aus individuellen Anlagenblindleistungen, die jeweils von einer der Windenergieanlagen erzeugt werden, und der Windpark eine Parksteuereinheit aufweist, vorbereitet zum Ermitteln einer insgesamt durch den Windpark einzuspeisenden Parkblindleistung, für jede Windenergieanlage, Ermitteln einer von der jeweiligen Windenergieanlage zu erzeugenden individuellen Anlagenblindleistung, wobei für jede Windenergieanlage das Ermitteln der zu erzeugenden individuellen Anlagenblindleistung in Abhängigkeit von ihrer individuellen Anlagenwirkleistung und in Abhängig von der einzuspeisenden Parkblindleistung bestimmt wird.

Das Einspeisen der Parkwirkleistung und auch das Einspeisen der Parkblindleistung erfolgt dadurch, dass die einzelnen Windenergieanlagen jeweils eine individuelle Anlagenwirkleistung und eine individuelle Anlagenblindleistung erzeugen und diese von allen Windenergieanlagen zum Netzanschlusspunkt übertragen und dort in das elektrische Versorgungsnetz eingespeist werden. Der Windpark speist also die Summe dieser Einzelleistungen ein.

Die Parksteuereinheit kann besonders als Recheneinheit mit Schnittstellen zur Kommunikation mit den Windenergieanlagen ausgebildet sein. Dadurch kann die Parksteuereinheit die jeweiligen Werte der individuellen Anlagenwirkleistung von den Windenergieanlagen empfangen. Außerdem weist die Parksteuereinheit eine Schnittstelle auf, um die insgesamt durch den Windpark einzuspeisende Parkblindleistung zu ermitteln. Diese kann unmittelbar von extern vorgegeben werden und in die Schnittstelle eingegeben werden. Alternativ kann die Parksteuereinheit eine solche einzuspeisende Parkblindleistung berechnen, insbesondere in Abhängigkeit von einer erfassten Netzspannung des elektrischen Versorgungsnetzes. Eine solche Erfassung kann auch über die Schnittstelle erfolgen.

Ansonsten ist der Windpark, insbesondere die Parksteuereinheit, dazu vorbereitet, ein Verfahren gemäß wenigstens einer der vorstehend beschriebenen Ausführungsformen auszuführen.

Die Erfindung wird nun nachfolgend beispielhaft unter Bezugnahme auf die begleitenden Figuren näher erläutert.

Figur 1    zeigt eine Windenergieanlage in einer perspektivischen Darstellung.

Figur 2    zeigt einen Windpark in einer schematischen Darstellung.

Figur 3    illustriert eine herkömmliche Aufteilung einer einzuspeisenden Parkblindleistung auf einzelne zu erzeugende Anlagenblindleistungen.

Figur 4    illustriert eine vorgeschlagene Aufteilung einer einzuspeisenden Parkblindleistung auf die einzelnen zu erzeugenden Anlagenblindleistungen.

Figur 5    zeigt ein Schema einer möglichen Ermittlung der einzustellenden individuellen Anlagenblindleistung.

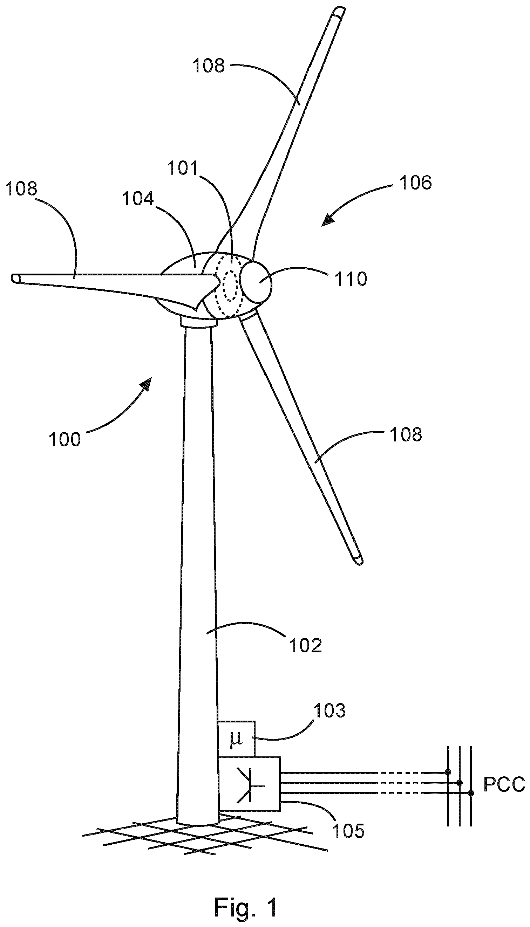

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

Die Windenergieanlage 100 weist dabei einen elektrischen Generator 101 auf, der in der Gondel 104 angedeutet ist. Mittels des Generators 101 kann elektrische Leistung erzeugt werden. Zum Einspeisen elektrischer Leistung ist eine Einspeiseeinheit 105 vorgesehen, die besonders als Wechselrichter ausgebildet sein kann. Damit kann ein dreiphasiger Einspeisestrom und/oder eine dreiphasige Einspeisespannung nach Amplitude, Frequenz und Phase erzeugt werden, zum Einspeisen an einem Netzanschlusspunkt PCC. Das kann direkt oder auch gemeinsam mit weiteren Windenergieanlagen in einem Windpark erfolgen. Zum Steuern der Windenergieanlage 100 und auch der Einspeiseeinheit 105 ist eine Anlagensteuerung 103 vorgesehen. Die Anlagensteuerung 103 kann auch Vorgabewerte von extern, insbesondere von einem zentralen Parkrechner erhalten.

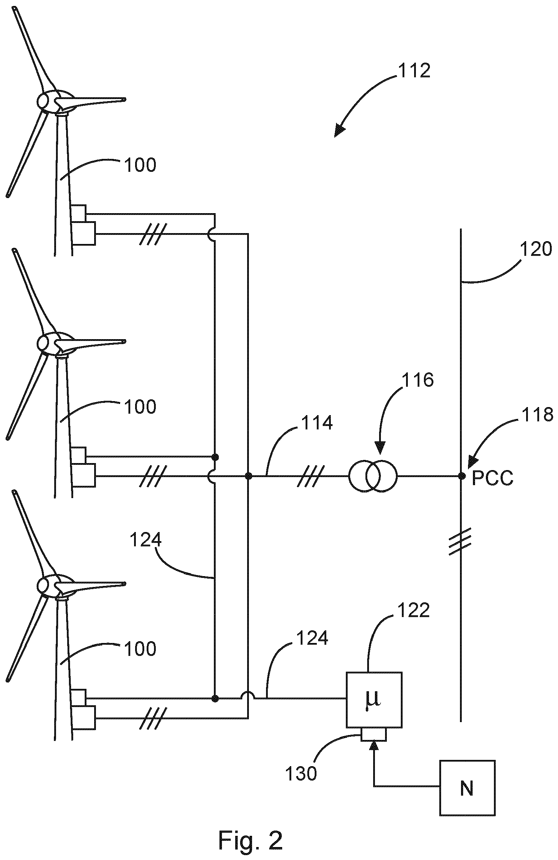

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112. Es kann beispielsweise das Parknetz 114 anders gestaltet sein, indem beispielsweise auch ein Transformator am Ausgang jeder Windenergieanlage 100 vorhanden ist, um nur ein anderes Ausführungsbeispiel zu nennen.

Der Windpark 112 weist zudem eine zentrale Parksteuereinheit 122 auf. Diese kann über Datenleitungen 124, oder kabellos, mit den Windenergieanlagen 100 verbunden sein, um darüber mit den Windenergieanlagen Daten auszutauschen und insbesondere Messwerte von den Windenergieanlagen 100 zu erhalten und Steuerwerte an die Windenergieanlagen 100 zu übertragen.

Die Parksteuereinheit 122 weist zudem eine Eingabeschnittstelle 130 auf. In dieser Eingabeschnittstelle 130 kann ein Wert für die einzuspeisende Parkblindleistung, also ein Parkblindleistungssollwert von einer externen Einheit wie einem Netzbetreiber 140 eingegeben werden. Der Parkblindleistungssollwert kann auch synonym als Parksollblindleistung bezeichnet werden.

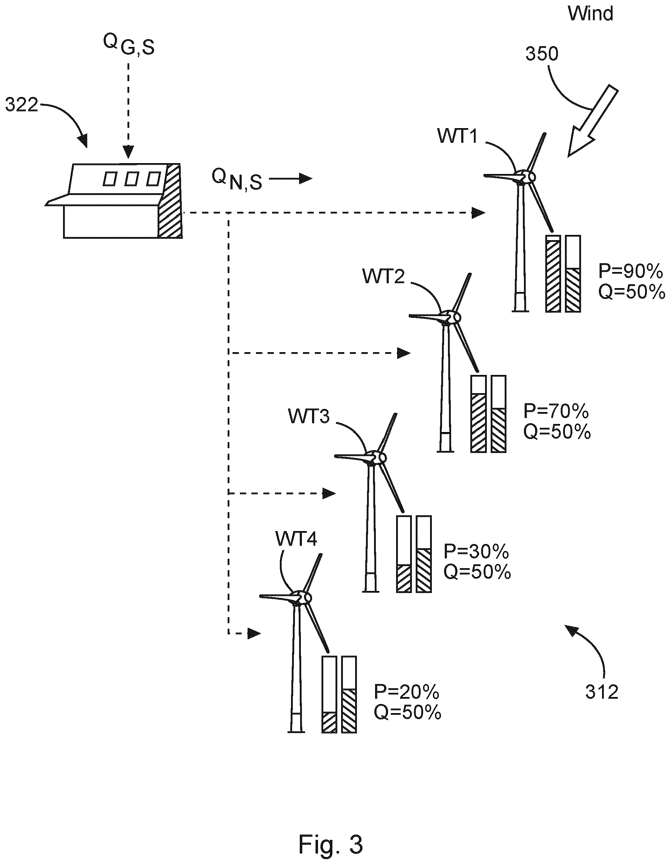

Figur 3 zeigt ebenfalls schematisch einen Windpark 312 mit einer ersten bis vierten Windenergieanlage WT1 bis WT4. Zum Zwecke der Veranschaulichung sind diese vier Windenergieanlagen WT1 bis WT4 bezogen auf eine beispielhaft eingezeichnete Windrichtung 350 hintereinander angeordnet. Der Einfachheit halber kann angenommen, dass die vier Windenergieanlagen WT1 bis WT4 von gleicher Bauart sind und somit dieselbe Nennleistung aufweisen.

Der Windpark 312 weist zudem eine Parksteuereinheit 322 auf, die einen Sollwert für eine einzuspeisende Parkblindleistung erhält, der als $Q_{G,S}$ bezeichnet wird. Daraus berechnet die Parksteuereinheit 322 einzelne zu erzeugende individuelle Anlagenblindleistungen $Q_{N,S}$. Hier erfolgt die Berechnung so, dass die Windenergieanlagen WT1 bis WT4 entsprechend ihrer Nennleistungen den jeweiligen einzuspeisenden individuellen Anlagenblindleistungswert erhalten. Der kann in dem gezeigten Beispiel der Figur 3 50 Prozent betragen, bezogen auf eine Bezugsgröße, zum Beispiel die maximal einspeisbare Blindleistung der jeweiligen Windenergieanlage, oder bezogen auf die Nennleistung der jeweiligen Windenergieanlage.

Das führt dazu, dass in dem Beispiel jede der Windenergieanlagen WT1 bis WT4 gleich viel Blindleistung erzeugen soll und auch erzeugt. Das ist dort als $Q = 50\ \%$ gekennzeichnet.

In dem veranschaulichenden Beispiel der Figur 3 wird von einem Fall ausgegangen, bei dem die Windenergieanlagen WT2 bis WT4 bezogen auf die Windrichtung jeweils hinter einer vorigen oder mehreren vorigen Windenergieanlagen stehen. Es wird angenommen, dass der Wind von der Windstärke ausreichend ist, dass die erste Windenergieanlage WT1 eine Leistung P von 90 Prozent erzeugen kann. Dieser prozentuale Wert kann sich auf die Nennleistung der Anlage beziehen.

Aufgrund der Abschattung wird davon ausgegangen, dass die zweite Windenergieanlage WT2 nur noch 70 Prozent erzeugen kann ($P = 70\ \%$), die dritte Windenergieanlage WT3 nur noch 30 Prozent ($P = 30\ \%$) und schließlich die vierte Windenergieanlage WT4 nur noch 20 Prozent ($P = 20\ \%$) erzeugen kann.

Diese Werte sind möglicherweise zur besseren Veranschaulichung überzeichnet, sie zeigen aber, dass alle Windenergieanlagen WT1 bis WT4 jeweils eine Blindleistung gleicher Höhe erzeugen müssen, nämlich 50 Prozent ($Q = 50\ \%$) wohingegen ihre Wirkleistungserzeugung unterschiedlich ist. Das führt dazu, dass die erste Windenergieanlage WT1 einen deutlich größeren Wirkleistungsanteil als Blindleistungsanteil erzeugt, wohingegen die vierte Windenergieanlage WT4 umgekehrt einen deutlich größeren Blindleistungsanteil ($Q = 50\%$) als einen Wirkleistungsanteil ($P = 20\%$) erzeugt. Besonders die Blindleistungserzeugung der vierten Windenergieanlage WT4 ist somit sehr verlustbehaftet.

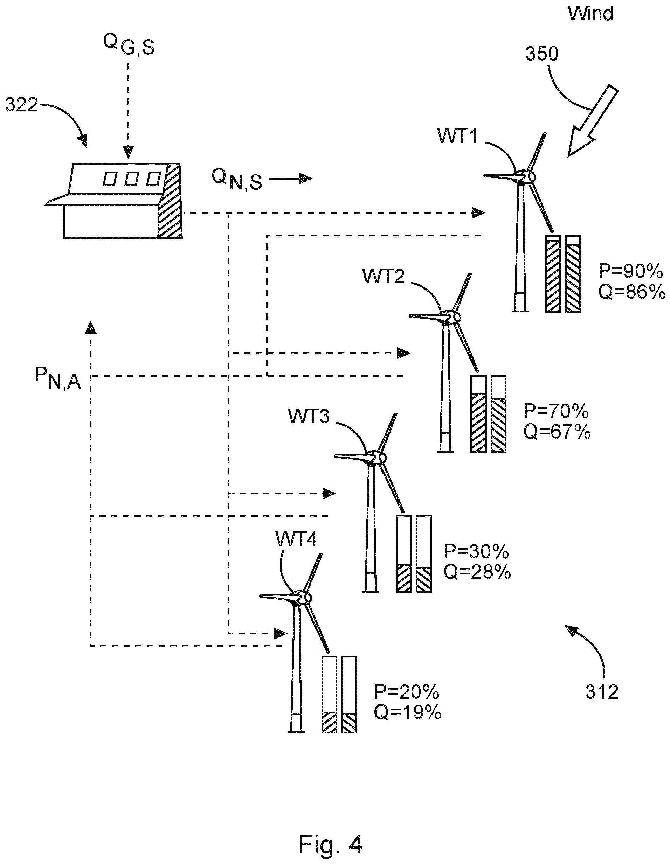

Um dem entgegenzuwirken wird eine Lösung in Figur 4 illustriert. Figur 4 zeigt einen Windpark 312, der dem der Figur 3 im Wesentlichen entspricht, sodass gleiche Bezugszeichen gewählt wurden. Allerdings gibt es einen Unterschied in der Ermittlung der zu erzeugenden individuellen Anlagenblindleistungen und dazu auch einen Unterschied in der Kommunikation zwischen den Windenergieanlagen WT1 bis WT4 und der Parksteuereinheit 322. Besonders ist vorgesehen, dass die Parksteuereinheit 322 aktuelle Werte der jeweiligen Anlagenwirkleistungen $P_{N,A}$ erhält. Davon abhängig werden dann die zu erzeugenden Anlagenblindleistungen $Q_{N,S}$ individuell erzeugt. Auch hier sind die Werte der jeweils zu erzeugenden individuellen Anlagenblindleistung $Q_{N,S}$ an den Windenergieanlagen WT1 bis WT4 als tatsächlich erzeugte Blindleistung $Q$ jeweils mit prozentualen Werten eingetragen.

Somit ist zu erkennen, dass nun die erzeugte Blindleistung der Windenergieanlagen WT1 bis WT4 etwa die gleiche Größenordnung aufweist wie die jeweils erzeugte Wirkleistung. Jedenfalls ist bei jeder Windenergieanlagen WT1 bis WT4 das Verhältnis der Blindleistung $Q$ zur Wirkleistung P ungefähr gleich, im gezeigten Beispiel nämlich etwas kleiner als der Wert 1. Der konkrete Wert ist nur ein Beispiel, wichtig ist aber, dass das Verhältnis bei allen Windenergieanlagen WT1 bis WT4 ungefähr gleich ist. Dadurch wird die Blindleistungserzeugung hinsichtlich Verlustminimierung im Vergleich zu der Art und Weise gemäß Figur 3 verbessert.

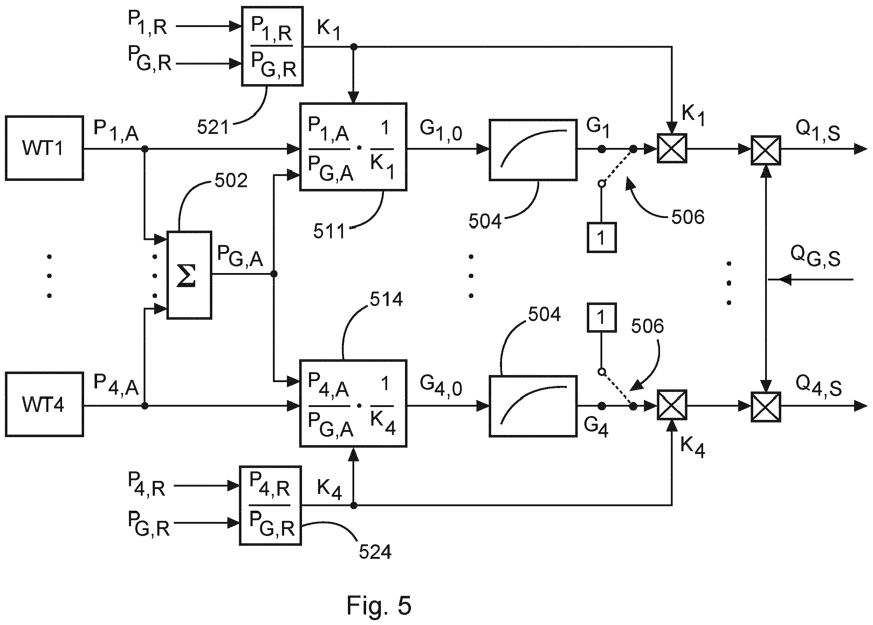

Figur 5 zeigt eine Struktur zum Ermitteln einer zu erzeugenden individuellen Anlagenblindleistung für jede Windenergieanlage. Figur 5 geht vereinfachend und in Anlehnung an die Figuren 3 und 4 von einem Windpark mit vier Windenergieanlagen WT1 bis WT4 aus. Davon sind der besseren Übersichtlichkeit halber nur die erste und vierte Windenergieanlage WT1 bzw. WT4 als Block angedeutet. Jede Windenergieanlage gibt jeweils einen Wert aus für die aktuell erzeugte Anlagenwirkleistung $P_{1,A}$ bis $P_{4,A}$. Alle diese Werte der erzeugten Anlagenwirkleistung werden auf ein Summenglied 502 gegeben, das somit durch Summenbildung die aktuell erzeugte Parkwirkleistung $P_{G,A}$ ermittelt. Außerdem wird eine insgesamt durch den Windpark einzuspeisende Parkblindleistung $Q_{G,S}$ ermittelt, die dafür von extern vorgegeben sein kann. Jedenfalls ist sie in Figur 5 als bekannte Größe eingezeichnet.

Aus diesen Werten kann für jede der Windenergieanlagen WT1 bis WT4 jeweils die zu erzeugende individuelle Anlagenblindleistung berechnet werden, nämlich für jede Windenergieanlage WT1 bis WT4 jeweils eine der zu erzeugenden individuellen Anlagenblindleistungen $Q_{1,S}$ bis $Q_{4,S}$. Dazu könnte beispielsweise für die erste Windenergieanlage WT1 die aktuell erzeugte Anlagenwirkleistung $P_{1,A}$ durch die aktuell erzeugte Parkwirkleistung $P_{G,A}$ geteilt werden und dieser Quotient kann mit dem Wert der durch den Windpark einzuspeisenden Parkblindleistung $Q_{G,S}$ multipliziert werden. Das ist eine Ausführungsform, die einfacher ist, als die in Figur 5 dargestellte.

Gemäß der Variante der Figur 5 ist hier nämlich noch zusätzlich eine dynamische Nachführung vorgesehen. Außerdem bietet die in Figur 5 gezeigte Berechnungsstruktur die Möglichkeit die zu erzeugenden individuellen Anlagenblindleistungen $Q_{1,S}$ bis $Q_{4,S}$ auch dann zu ermitteln, wenn beispielsweise eine Kommunikationsstörung im Windpark vorliegt, sodass die Werte der aktuell erzeugten Anlagenwirkleistungen $P_{1,A}$ bis $P_{4,A}$ nicht bekannt sind. Für diesen Störungsfall kann eine nicht optimale Aufteilung akzeptabel sein.

Jedenfalls ist für jede Windenergieanlage ein Gewichtungsblock 511 bzw. 514 vorgesehen, der jeweils einen Anfangsgewichtungswert $G_{1,0}$ bzw. $G_{4,0}$ bestimmt. Dieser Anfangsgewichtungswert $G_{1,0}$ bzw. $G_{4,0}$ wird über ein Verzögerungsglied 504 gegeben, sodass der nachgeführte Gewichtungswert $G_1$ bzw. $G_4$ entsteht. Das Verzögerungsglied 504 kann beispielsweise als Verzögerungsglied erster Ordnung ausgebildet sein, mit einer Verstärkung von 1. Der so erhaltene nachgeführte Gewichtungswert $G_1$ bzw. $G_4$, der aufgrund der verzögerten Nachführung entsprechend veränderlich ist, wird dann mit einem Grundwert $K_1$ bzw. $K_4$ multipliziert. Das Ergebnis wird schließlich mit dem Wert der einzuspeisenden Parkblindleistung $Q_{G,S}$ multipliziert und daraus ergibt sich die jeweilige zu erzeugende individuelle Anlagenblindleistung $Q_{1,S}$ bzw. $Q_{4,S}$.

Der Grundwert $K_1$ bzw. $K_4$ ergibt sich aus dem Quotient der jeweiligen Anlagennennleistung $P_{1,R}$ bzw. $P_{4,R}$ mit der Parknennleistung $P_{G,R}$. Dieser Quotient wird im Vorgabeberechnungsblock 521 bzw. 524 gebildet. Das Ergebnis ist somit der Grundwert $K_1$ bzw. $K_4$ und dieser gibt also ein Verhältnis zur Aufteilung der einzuspeisenden Parkblindleistung allein abhängig der Nennwerte vor. Sollte eine Kommunikationsunterbrechung oder eine andere Störung auftreten, die verhindert, dass die Werte der aktuell erzeugten Wirkleistungen bekannt sind, so kann die Berechnung der jeweils zu erzeugenden individuellen Anlagenblindleistungen $Q_{1,S}$ bzw. $Q_{4,S}$ allein abhängig von diesem Grundwert $K_1$ bzw. $K_4$ durchgeführt werden, multipliziert mit der insgesamt durch den Windpark einzuspeisenden Parkblindleistung $Q_{G,S}$. Dafür ist ein Ausnahmeschalter 506 jeweils vorgesehen, der so geschaltet werden kann, dass der Grundwert $K_1$ bzw. $K_4$ nur mit dem Wert 1 multipliziert wird.

Im Normalfall ist dieser Ausnahmeschalter 506 aber geschlossen, so wie das in Figur 5 auch eingezeichnet ist. Dann entfaltet die Gewichtung ihre Wirkung. Entsprechend berechnet sich der Grundgewichtungswert $G_{1,0}$ bzw. $G_{4,0}$ aus dem Verhältnis der aktuell erzeugten Anlagenwirkleistung $P_{1,A}$ bzw. $P_{4,A}$ mit der aktuell erzeugten Parkwirkleistung $P_{G,A}$, wobei zusätzlich der Grundwert $K_1$ bzw. $K_4$ herausgerechnet wird, denn die hierbei bestimmte Gewichtung soll schließlich mit dem Grundwert $K_1$ bzw. $K_4$ multipliziert werden, der sich dadurch dann jedenfalls im stationären Zustand heraus kürzt. Für den beschriebenen Störungsfall, wenn der Ausnahmeschalter 506 geöffnet, ist dieser Grundwert $K_1$ bzw. $K_4$ aber erforderlich.

Entsprechend wird der Grundgewichtungswert $G_{1,0}$ bzw. $G_{4,0}$ berechnet und er kann über die Verzögerungsfunktion 504 nachgeführt werden.

Besonders die Verzögerungsfunktion 504 dient auch der Veranschaulichung. Eine andere Möglichkeit der verzögerten Nachführung besteht darin, dass stattdessen oder zusätzlich zu diesem Verzögerungsglied 504 die Messwerte der Windenergieanlagen, also die aktuell erzeugten Anlagenwirkleistungen $P_{1,A}$ bzw. $P_{4,A}$ entsprechend verzögert ermittelt bzw. für die Berücksichtigung zum Ermitteln der zu erzeugenden individuellen Anlagenblindleistungen aktualisiert werden. Eine solche Verzögerung kann zusätzlich oder alternativ für die Verwendung der Parkblindleistung $Q_{G,S}$ vorgesehen sein.

**Patentansprüche**

1. Verfahren zum Einspeisen elektrischer Blindleistung (Q) an einem Netzanschlusspunkt in ein elektrisches Versorgungsnetz mittels eines mehrere Windenergieanlagen (100, WT1 - WT4) aufweisenden Windparks (112), wobei

    - der Windpark (112) eine Parkwirkleistung ($P_{C,A}$) in das elektrische Versorgungsnetz einspeist und die Parkwirkleistung ($P_{C,A}$) sich zusammensetzt aus individuellen Anlagenwirkleistungen, die jeweils von einer der Windenergieanlagen (100, WT1 - WT4) oder, wenn der Windpark (112) zu den Windenergieanlagen (100, WT1 - WT4) eine oder mehrere weitere Erzeugungsanlagen aufweist, von einer der weiteren Erzeugungsanlagen erzeugt werden, und
    - der Windpark (112) eine Parkblindleistung ($Q_{G,S}$) in das elektrische Versorgungsnetz einspeist und die Parkblindleistung ($Q_{G,S}$) sich zusammensetzt aus individuellen Anlagenblindleistungen ($Q_{1,S}$, $Q_{4,S}$. $Q_{N,S}$) die jeweils von einer der Windenergieanlagen (100, WT1 - WT4) oder einer der weiteren Erzeugungsanlagen erzeugt werden, und
    umfassend die Schritte
    - Ermitteln einer insgesamt durch den Windpark (112) einzuspeisenden Parkblindleistung ($Q_{G,S}$),
    - für jede Windenergieanlage (100, WT1 - WT4) und ggf. jede weitere Erzeugungsanlage Ermitteln einer von der jeweiligen Windenergieanlage (100, WT1 - WT4) bzw. jeder weiteren Erzeugungsanlage zu erzeugenden individuellen Anlagenblindleistung ($Q_{1,S}$, $Q_{4,S}$, $Q_{N,S}$), wobei
    - für jede Windenergieanlage (100, WT1 - WT4) bzw. für jede weitere Erzeugungsanlage das Ermitteln der zu erzeugenden individuellen Anlagenblindleistung ($Q_{1,S}$, $Q_{4,S}$, $Q_{N,S}$) in Abhängigkeit von ihrer individuellen Anlagenwirkleistung und in Abhängig von der einzuspeisenden Parkblindleistung ($Q_{G,S}$) bestimmt wird.

2. Verfahren nach Anspruch 1, **dadurch gekennzeichnet, dass**

    - das Ermitteln der jeweils zu erzeugenden individuellen Anlagenblindleistung ($Q_{1,S}$, $Q_{4,S}$. $Q_{N,S}$) in Abhängigkeit von allen individuellen Anlagenwirkleistungen erfolgt, und/oder
    - die individuellen Blindleistungen so bestimmt und erzeugt werden, dass die Summe aller individuellen Blindleistungen der Parkblindleistung ($Q_{G,S}$) entspricht.

3. Verfahren nach Anspruch 1 oder 2, **dadurch gekennzeichnet, dass**

    - das Ermitteln der individuellen Anlagenblindleistung $Q_{N,S}$ in Abhängigkeit der einzuspeisenden Parkblindleistung $Q_{G,S}$, einer insgesamt eingespeisten Parkwirkleistung $P_{G,A}$ und der jeweils eingespeisten individuellen Anlagenwirkleistung $P_{N,A}$ bestimmt wird, nach der Formel:

    $$Q_{N,S}=(P_{N,A}/P_{G,A})*Q_{G,S}$$

    wobei der Index N jeweils die betrachtete Windenergieanlage (100, WT1 - WT4) bzw. eine der weiteren Erzeugungsanlagen bezeichnet.

4. Verfahren nach einem der vorstehenden Ansprüche, **dadurch gekennzeichnet, dass** das Ermitteln der individuellen Anlagenblindleistung durch eine zentrale Parksteuereinheit (122, 322) erfolgt.

5. Verfahren nach einem der vorstehenden Ansprüche, **dadurch gekennzeichnet, dass** das Ermitteln der individuellen Anlagenblindleistung zusätzlich in Abhängigkeit von der tatsächlich eingespeisten Parkblindleistung ($Q_{G,S}$) erfolgt.

6. Verfahren nach einem der vorstehenden Ansprüche, **dadurch gekennzeichnet, dass** ein Verhältnis der individuellen Anlagenblindleistung zur individuellen Anlagenwirkleistung für jede Windenergieanlage (100, WT1 - WT4) bzw. jede weitere Erzeugungsanlage gleich ist.

7. Verfahren nach einem der vorstehenden Ansprüche, **dadurch gekennzeichnet, dass**

    - jede einzustellende individuelle Anlagenblindleistung aus der einzuspeisenden Parkblindleistung ($Q_{G,S}$) über eine individuelle Umrechnungsfunktion berechnet wird, wobei sich die Umrechnungsfunktion wenigstens zusammensetzt aus

        - einem vorbestimmbaren, für jede Windenergieanlage (100, WT1 - WT4) bzw. jede weitere Erzeugungsanlage individuellen Grundwert, und
        - einer variablen, für jede Windenergieanlage (100, WT1 - WT4) bzw. jede weitere Erzeugungsanlage individuellen Gewichtung, wobei die variable Gewichtung in Abhängigkeit von der individuellen Anlagenwirkleistung der zugehörigen Windenergieanlage (100, WT1 - WT4) bzw. jede weitere Erzeugungsanlage ermittelt wird.

8. Verfahren Anspruch 7, **dadurch gekennzeichnet, dass**

    - jede einzustellende individuelle Anlagenblindleistung $Q_{N,S}$ aus der einzuspeisenden Parkblindleistung $Q_{G,S}$ berechnet nach der Berechnungsvorschrift

$$Q_{N,S} = k_N * G_N * Q_{G,S}$$

    mit
    $k_N$ als Grundwert, und $G_N$ als Gewichtung, wobei der Index N jeweils die betrachtete Windenergieanlage (100, WT1 - WT4) bzw. eine der weiteren Erzeugungsanlagen bezeichnet, wobei insbesondere
    - jede Windenergieanlage N bzw. jede weitere Erzeugungsanlage N durch eine Anlagennennleistung $P_{N,R}$ gekennzeichnet ist,
    - der Windpark (112) durch eine Parknennleistung $P_{G,R}$ gekennzeichnet ist, die sich insbesondere als Summe aller Anlagennennleistungen $P_{N,R}$ ergibt, und
    - der Grundwert $k_N$ jeweils ein Verhältnis der Anlagennennleistung $P_{N,R}$ zur Parknennleistung $P_{G,R}$ ist, und/oder
    - die variable Gewichtung $G_N$ jeweils sich aus einem Verhältnis ergibt, oder ein Verhältnis beschreibt zwischen
    - dem Verhältnis der Anlagenwirkleistung $P_{N,A}$ zur Parkwirkleistung $P_{G,A}$ und
    - dem Verhältnis der Anlagennennleistung $P_{N,R}$ zur Parknennleistung $P_{G,R}$, insbesondere über die Berechnung:
    - $G_{N,0} = (P_{N,A}/P_{G,A})/(P_{N,R}/P_{G,R})$, wobei $G_N = G_{N,0}$ ist, oder $G_N$ über eine dynamische Funktion, insbesondere mit ein PT1-Verhalten, $G_{N,0}$ nachgeführt wird.

9. Verfahren nach einem der vorstehenden Ansprüche, **dadurch gekennzeichnet, dass** bei einer Änderung der eingespeisten individuellen Anlagenwirkleistung und/oder einer bzw. der eingespeisten Parkwirkleistung ($P_{G,A}$) ein Anpassen der individuellen Anlagenblindleistung erst nach einer vorbestimmten Zeitverzögerung und/oder unter weiterer Verwendung einer dynamischen Nachführfunktion erfolgt und/oder unter Berücksichtigung einer aktuellen Windleistung des Windparks (112).

10. Verfahren nach einem der vorstehenden Ansprüche, **dadurch gekennzeichnet, dass**

    - die zu erzeugende individuelle Anlagenblindleistung vorübergehend jeweils über einen vorbestimmten Vorgabewert aus der einzuspeisenden Parkblindleistung ($Q_{G,S}$) bestimmt wird, wenn wenigstens eine Anlagenwirkleistung für die Ermittlung der zu erzeugenden individuellen Anlagenblindleistung nicht verfügbar ist.

11. Verfahren nach einem der vorstehenden Ansprüche, **dadurch gekennzeichnet, dass**

    - die zu erzeugende individuelle Anlagenblindleistung zusätzlich in Abhängigkeit von wenigstens einem Kriterium ermittelt wird, ausgewählt aus der Liste aufweisend
    - Leitungsverluste des Windparks (112),
    - einen Kabelfaktor, der besonders als Gewichtungsfaktor den Abstand der Windenergieanlage (100, WT1 - WT4) zum Netzanschlusspunkt berücksichtigt, oder eine Netzdämpfung, oder eine Netzverstärkung eines eingebrachten Blindstroms,
    - einen festen Umrichterfaktor, der in Abhängigkeit von einer Einspeiseeinheit, insbesondere von einem Wechselrichter, vorgegeben wird, und insbesondere als Gewichtungsfaktor, einen vorgegebenen Umrichterwirkungsgrad berücksichtigt,
    - einen dynamischen Umrichterfaktor, der aktuell erfasste Eigenschaften der Einspeiseeinheit, insbesondere des Wechselrichters, insbesondere einen aktuell erfassten Wirkungsgrad der Einspeiseeinheit berücksichtigt,
    - einen Überlastfaktor, der Zeit und/oder Stärke einer Überlast berücksichtigt,
    - eine erwartete oder prognostizierte Leistung, und
    - einen Reservefaktor, der mögliche Veränderungen der Wirkleistungserzeugung zur Erfüllung einer Systemdienstleistung berücksichtigt, insbesondere so, dass die zu erzeugende individuelle Anlagenblindleistung in Abhängigkeit des Reservefaktors gegenüber einer individuellen Anlagenblindleistung, die keinen Reservefaktor berücksichtigt, verringert wird.

12. Windpark (112) mit mehreren Windenergieanlagen (100, WT1 - WT4) zum Einspeisen elektrischer Blindleistung an einem Netzanschlusspunkt in ein elektrisches Versorgungsnetz, wobei

    - der Windpark (112) dazu vorbereitet ist, so betrieben zu werden, dass

        - er eine Parkwirkleistung ($P_{G,A}$) in das elektrische Versorgungsnetz einspeist und die Parkwirkleistung ($P_{G,A}$) sich zusammensetzt aus individuellen Anlagenwirkleistungen, die jeweils von einer der Windenergieanlagen (100, WT1 - WT4) oder, wenn der Windpark (112) zu den Windenergieanlagen (100, WT1 - WT4) eine oder mehrere weitere Erzeugungsanlagen aufweist, von einer der weiteren Erzeugungsanlagen erzeugt werden, und dass

- er eine Parkblindleistung ($Q_{G,S}$) in das elektrische Versorgungsnetz einspeist und die Parkblindleistung ($Q_{G,S}$) sich zusammensetzt aus individuellen Anlagenblindleistungen, die jeweils von einer der Windenergieanlagen (100, WT1 - WT4) oder einer der weiteren Erzeugungsanlagen erzeugt werden, und

- der Windpark (112) eine Parksteuereinheit (122, 322) aufweist, vorbereitet zum
- Ermitteln einer insgesamt durch den Windpark (112) einzuspeisenden Parkblindleistung ($Q_{G,S}$),
- für jede Windenergieanlage (100, WT1 - WT4) und ggf. jede weitere Erzeugungsanlage Ermitteln einer von der jeweiligen Windenergieanlage (100, WT1 - WT4) bzw. jeder weiteren Erzeugungsanlage zu erzeugenden individuellen Anlagenblindleistung, wobei
- für jede Windenergieanlage (100, WT1 - WT4) bzw. für jede weitere Erzeugungsanlage das Ermitteln der zu erzeugenden individuellen Anlagenblindleistung in Abhängigkeit von ihrer individuellen Anlagenwirkleistung und in Abhängig von der einzuspeisenden Parkblindleistung ($Q_{G,S}$) bestimmt wird.

**13.** Windpark (112) nach Anspruch 12, **dadurch gekennzeichnet, dass** der Windpark (112), insbesondere die Parksteuereinheit (122, 322), dazu vorbereitet ist, ein Verfahren gemäß einem der Ansprüche 1 bis 11 durchzuführen.

Fig. 1

Fig. 2

$Q_{G,S}$

322

Wind

350

WT1

$Q_{N,S}$

P=90%
Q=50%

WT2

P=70%
Q=50%

WT3

P=30%
Q=50%

WT4

312

P=20%
Q=50%

Fig. 3

Wind

350

$Q_{G,S}$

322

$Q_{N,S}$ →

WT1

P=90%
Q=86%

WT2

P=70%
Q=67%

$P_{N,A}$

WT3

P=30%
Q=28%

WT4

312

P=20%
Q=19%

Fig. 4

Fig. 5

**Europäisches Patentamt**
**European Patent Office**
**Office européen des brevets**

# EUROPÄISCHER RECHERCHENBERICHT

Nummer der Anmeldung

EP 20 20 8722

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 355 317 A1 (SIEMENS AG [DE]) 10. August 2011 (2011-08-10) | 1-6,12, 13 | INV. F03D7/02 |
| Y | * Absätze [0001] - [0005], [0039] - [0052]; Abbildungen 1-5,10 * | 7-11 | F03D7/04 F03D9/25 H02J3/18 |
| Y | EP 3 280 021 A1 (SENVION GMBH [DE]) 7. Februar 2018 (2018-02-07) * Absätze [0001] - [0018]; Abbildungen 1,2 * | 9 | H02J3/50 H02J3/38 |
| Y | DE 10 2015 122640 A1 (DHYBRID POWER SYSTEMS GMBH [DE]) 22. Juni 2017 (2017-06-22) * Absätze [0036], [0037]; Abbildungen 1-3 * | 7,8 | |
| Y | EP 2 933 478 A1 (GEN ELECTRIC [US]) 21. Oktober 2015 (2015-10-21) * Absätze [0003] - [0008]; Abbildungen 1,2 * | 7,8,10 | |
| Y | DE 10 2012 210613 A1 (REPOWER SYSTEMS SE [DE]) 24. Dezember 2013 (2013-12-24) * Absätze [0002], [0015] - [0018], [0032]; Abbildung 1 * | 8 | RECHERCHIERTE SACHGEBIETE (IPC) F03D H02J |
| Y | DE 10 2011 081446 A1 (WOBBEN PROPERTIES GMBH [DE]) 28. Februar 2013 (2013-02-28) * Absätze [0004], [0005], [0019], [0020]; Abbildungen 1,2 * | 10 | |
| Y | WO 2014/194914 A1 (VESTAS WIND SYS AS [DK]) 11. Dezember 2014 (2014-12-11) * Seiten 1-5; Abbildungen 2,4 * | 11 | |

Der vorliegende Recherchenbericht wurde für alle Patentansprüche erstellt

| Recherchenort | Abschlußdatum der Recherche | Prüfer |
|---|---|---|
| München | 20. April 2021 | Krasser, Bernhard |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 20 20 8722

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-04-2021

| Im Recherchenbericht angeführtes Patentdokument | Datum der Veröffentlichung | Mitglied(er) der Patentfamilie | Datum der Veröffentlichung |
|---|---|---|---|
| EP 2355317 A1 | 10-08-2011 | CA 2729463 A1 | 28-07-2011 |
| | | CN 102142690 A | 03-08-2011 |
| | | DK 2355317 T3 | 07-10-2019 |
| | | EP 2355317 A1 | 10-08-2011 |
| | | ES 2753821 T3 | 14-04-2020 |
| | | JP 2011160652 A | 18-08-2011 |
| | | NZ 590719 A | 31-08-2012 |
| | | PL 2355317 T3 | 31-01-2020 |
| | | PT 2355317 T | 14-10-2019 |
| | | US 2011182093 A1 | 28-07-2011 |
| EP 3280021 A1 | 07-02-2018 | DE 102016009413 A1 | 08-02-2018 |
| | | EP 3280021 A1 | 07-02-2018 |
| DE 102015122640 A1 | 22-06-2017 | KEINE | |
| EP 2933478 A1 | 21-10-2015 | CA 2887493 A1 | 15-10-2015 |
| | | DK 2933478 T3 | 08-02-2021 |
| | | EP 2933478 A1 | 21-10-2015 |
| | | US 2015295529 A1 | 15-10-2015 |
| DE 102012210613 A1 | 24-12-2013 | CA 2877404 A1 | 27-12-2013 |
| | | DE 102012210613 A1 | 24-12-2013 |
| | | DK 2864631 T3 | 29-03-2021 |
| | | EP 2864631 A2 | 29-04-2015 |
| | | US 2015345468 A1 | 03-12-2015 |
| | | WO 2013189733 A2 | 27-12-2013 |
| DE 102011081446 A1 | 28-02-2013 | AR 087642 A1 | 09-04-2014 |
| | | AU 2012299699 A1 | 06-03-2014 |
| | | BR 112014004021 A2 | 07-03-2017 |
| | | CA 2844958 A1 | 28-02-2013 |
| | | CL 2014000397 A1 | 16-01-2015 |
| | | CN 103765717 A | 30-04-2014 |
| | | CY 1116568 T1 | 15-03-2017 |
| | | DE 102011081446 A1 | 28-02-2013 |
| | | DK 2748908 T3 | 29-06-2015 |
| | | EP 2748908 A1 | 02-07-2014 |
| | | EP 2937968 A1 | 28-10-2015 |
| | | ES 2543680 T3 | 21-08-2015 |
| | | HR P20150855 T1 | 25-09-2015 |
| | | HU E025988 T2 | 28-04-2016 |
| | | JP 6027614 B2 | 16-11-2016 |
| | | JP 2014526235 A | 02-10-2014 |
| | | KR 20140054294 A | 08-05-2014 |
| | | ME 02195 B | 20-02-2016 |

Für nähere Einzelheiten zu diesem Anhang : siehe Amtsblatt des Europäischen Patentamts, Nr.12/82

EPO FORM P0461

Seite 1 von 2

**ANHANG ZUM EUROPÄISCHEN RECHERCHENBERICHT**
**ÜBER DIE EUROPÄISCHE PATENTANMELDUNG NR.**

EP 20 20 8722

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-04-2021

| Im Recherchenbericht angeführtes Patentdokument | Datum der Veröffentlichung | Mitglied(er) der Patentfamilie | | Datum der Veröffentlichung |
|---|---|---|---|---|
| | | NZ | 621182 A | 27-11-2015 |
| | | PL | 2748908 T3 | 30-10-2015 |
| | | PT | 2748908 E | 09-10-2015 |
| | | SI | 2748908 T1 | 31-08-2015 |
| | | TW | 201320532 A | 16-05-2013 |
| | | US | 2014225446 A1 | 14-08-2014 |
| | | WO | 2013026748 A1 | 28-02-2013 |
| | | ZA | 201400974 B | 23-12-2014 |
| WO 2014194914 A1 | 11-12-2014 | CN | 105308312 A | 03-02-2016 |
| | | CN | 110080936 A | 02-08-2019 |
| | | EP | 3004634 A1 | 13-04-2016 |
| | | US | 2016108890 A1 | 21-04-2016 |
| | | US | 2019120207 A1 | 25-04-2019 |
| | | WO | 2014194914 A1 | 11-12-2014 |

EPO FORM P0461

Für nähere Einzelheiten zu diesem Anhang : siehe Amtsblatt des Europäischen Patentamts, Nr.12/82

Seite 2 von 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013210812 A1
- DE 102007018888 A1
- DE 102018108023 A1